# EUROPÄISCHE PATENTSCHRIFT

(11) **EP 2 644 347 B1**
(45) Veröffentlichungstag und Bekanntmachung des Hinweises auf die Patenterteilung: **24.04.2019**
(21) Anmeldenummer: 13000320.5
(22) Anmeldetag: 23.01.2013
(51) Int. Cl.: B29C 33/02, B29C 35/16, B29C 70/46, B29K 105/08

(54) **VERFAHREN ZUR HERSTELLUNG EINES IM WESENTLICHEN SCHALENFÖRMIGEN, FASERVERSTÄRKTEN KUNSTSTOFFTEILS**
METHOD FOR THE PRODUCTION OF ESSENTIALLY SHELL-SHAPED FIBRE-REINFORCED PLASTIC PARTS
PROCÉDÉ DESTINÉ À FABRIQUER UN ÉLÉMENT EN MATIÈRE SYNTHÉTIQUE ESSENTIELLEMENT EN FORME DE COQUE RENFORCÉ EN FIBRES

(30) Priorität: 27.03.2012 DE 102012006034
(43) Veröffentlichungstag der Anmeldung: 02.10.2013
(73) Patentinhaber: Aumann Beelen GmbH, 48361 Beelen (DE)
(72) Erfinder: Bühlmeyer, Robert, 33442 Herzebrock-Clarholz (DE)
(74) Vertreter: Bittner, Thomas L.

(56) Entgegenhaltungen:
- EP-A1- 0 951 984
- EP-A1- 2 090 423
- EP-A1- 2 420 378
- EP-A2- 1 284 182
- US-A1- 2006 012 075
- US-B1- 6 884 379
- B. Tomas Aström: "Thermoplastic composite manufacturing" In: "Composites", 1. Dezember 2001 (2001-12-01), ASM International, USA, XP055078683, ISBN: 978-0-87-170703-1 Seiten 570-578, * Abbildung 7 * * *
- Charles W. Peterson ET AL: "Compression molding" In: "ASM handbook / prepared under the direction of the ASM International Handbook Committee", 1. Dezember 2001 (2001-12-01), ASM International, Materials Park, Ohio ,USA, XP055225168, ISBN: 978-0-87170-703-1 Seiten 516-535, * Seite 516 * * Seite 518 - Seite 520 *

## Beschreibung

Die Erfindung betrifft ein Verfahren zur Herstellung eines im Wesentlichen schalenförmigen, faserverstärkten Kunststoffteils gemäß dem Oberbegriff von Anspruch 1.

Schalenförmige, faserverstärkte Kunststoffteile der in Rede stehenden Art finden sich in zahlreichen technischen Anwendungsbereichen. Beispielhaft sei hier der Bereich der Strukturteile von Kraftfahrzeugen genannt. Schalenförmige faserverstärkte Kunststoffteile werden hier für Säulen, Träger, Crashelemente, Sitze o. dgl. benötigt. Angesichts der hohen Stückzahlen kommt der Automatisierbarkeit und der Effizienz der Fertigung ganz besondere Bedeutung zu.

Das bekannte Verfahren (DE 198 29 352 A1), von dem die Erfindung ausgeht, betrifft die Umformung eines flachen Materialzuschnitts aus gewebeverstärktem Kunststoff in einem Umformwerkzeug. Um die für das Umformen erforderliche Flexibilität des Materialzuschnitts zu erreichen, wird der Materialzuschnitt vor dem Umformen vorgewärmt. Hierfür wird vor dem Umformen eine entsprechende Heizeinrichtung in das Umformwerkzeug hinein verstellt. Nach dem Vorwärmen wird die Heizeinrichtung aus dem Umformwerkzeug heraus verstellt und das Umformwerkzeug zum Umformen des Materialzuschnitts geschlossen. Das eigentliche Umformen erfolgt in einem ersten Schritt durch einen Formstempel und in einem zweiten Schritt durch die Beaufschlagung des Materialzuschnitts mit Druckluft o. dgl.. Nachteilig bei dem bekannten Verfahren ist die zu erwartende materialbedingte Beschränkung bei der Formgestaltung des Kunststoffteils.

Bei einem anderen bekannten Verfahren (EP 1 301 322 B1) wird ein Materialzuschnitt einer Fasermatte in das Umformwerkzeug eingelegt und mit einem reaktionsfähigen Matrix-Material, hier einem reaktionsfähigen Matrixharz, flachendeckend besprüht. Anschließend wird zum Umformen des Materialzuschnitts das Umformwerkzeug geschlossen und in dem Schließzustand gehalten, bis das Matrixharz ausgehärtet ist. Zu dem obigen Besprühen des Materialzuschnitts mit einem Matrixharz kann das Matrixharz bei geschlossenem Umformwerkzeug in die Kavität zwischen Obermatrize und Untermatrize des Umformwerkzeugs injiziert werden. Dieses sogenannte Harzinjektionsverfahren (RTM-"Resin Transfer Moulding") ermöglicht eine vollautomatische Fertigung von Kunststoffteilen mit außerordentlichen guter Oberflächengüte.

Das nachträgliche Einbringen eines Matrixharzes in den aus einem hochflexiblen Fasermaterial bestehenden Materialzuschnitt führt zu einer einfachen Handhabung des Materialzuschnitts vor dessen Einlegen in das Umformwerkzeug sowie zu einer hohen Flexibilität bei der Formgestaltung des herzustellenden Kunststoffteils. Allerdings stellt das optimale Einbringen des Matrixharzes in das Fasermaterial anlagentechnisch und prozesstechnisch eine Herausforderung dar.

Das Dokument B. T. Aström "Thermoplastic composite manufacturing", in: "Composites", ASM International, USA, 2001, Seiten 570 - 578 beschreibt verschiedene Fertigungsverfahren für thermoplastische Kompositmaterialien. Hierzu gehört das Formpressen von vorgeheiztem Rohmaterial in gekühlten Formen.

Der Erfindung liegt das Problem zugrunde, das bekannte Verfahren derart auszugestalten und weiterzubilden, dass eine hohe Flexibilität bei der Formgestaltung des herzustellenden Kunststoffteils in automatisierter Fertigung möglich ist.

Zur Lösung ist ein Verfahren zur Herstellung eines im Wesentlichen schalenförmigen, faserverstärkten Kunststoffteils nach Anspruch 1 geschaffen.

Wesentlich ist die grundsätzliche Überlegung, dem Herstellungsverfahren einen Materialzuschnitt aus einem mit einem Matrix-Material imprägnierten Fasermaterial zugrundezulegen. Ein solches Material wird als "Prepreg-Material" bezeichnet. Ein Prepreg-Material ist im Ausgangszustand bereits mit einem Matrixharz imprägniert, das sich bei dessen Aufheizen verflüssigt. Ein weiteres Aufheizen über eine Aktivierungstemperatur führt schließlich zu einem Aushärten des Matrixharzes. Alternativ oder zusätzlich kann es vorgesehen sein, dass die Fasermatte Kleberfäden aufweist, die entsprechend mit dem Matrixharz versehen sind. In neiden Fällen verflüssigt sich beim Aufheizen das in der Fasermatte vorhandene Matrixharz, das die Fasermatte im Anschluss wie oben angesprochen tränkt.

Eine vorteilhafte Eigenschaft von Prepreg-Material besteht darin, dass ein entsprechender Materialzuschnitt bei entsprechender Vorwärmung in weitgehend beliebiger Formgestaltung umformbar ist, gleichzeitig jedoch eine gewisse Formstabilität behält, so dass eine automatisierte Handhabung des Materialzuschnitts möglich ist. Entsprechend wird vorgeschlagen, den Materialzuschnitt vor dem Einlegen in das Umformwerkzeug entsprechend vorzuwärmen.

Interessant ist nun die Tatsache, dass mindestens eine formgebende Fläche des Umformwerkzeugs bei eingelegtem Materialzuschnitt zumindest zum Teil mittels einer Kühleinrichtung gekühlt wird und/oder bereits gekühlt ist. Diese der Vorwärmung des Materialzuschnitts an sich zuwider laufende Kühlung hat einerseits den Effekt, dass ein Anhaften des durch die Vorwärmung in der Regel klebrigen Materialzuschnitts an den formgebenden Flächen des Umformwerkzeugs vermieden wird. Ein weiterer, hier im Vordergrund stehender Effekt besteht darin, dass durch die Kühlung eine gezielte Versteifung des Materialzuschnitts möglich ist, beispielsweise um ein Besäumen oder Lochen des Materialzuschnitts ohne "Schmiereffekt" zu gewährleisten.

Der sachgerechten Steuerung von Vorwärmung einerseits und Kühlung andererseits kommt vorliegend ganz besondere Bedeutung zu. In einer Variante kann vorgesehen sein, dass das Versteifen des Materialzuschnitts zumindest im Wesentlichen nach dem Umformen erfolgt. Damit wird sichergestellt, dass sowohl die durch die Vorwärmung bedingte Materialflexibilität als auch die durch die Kühlung bedingte Materialversteifung zielgerichtet eingesetzt werden.

Bei der bevorzugten Ausgestaltung ist eine Konturierung des Materialzuschnitts durch eine trennende Bearbeitung vorgesehen, die eine Untermaß-Kontur in den Materialzuschnitt einbringen kann. Die weiter bevorzugten Ausgestaltungen betreffen in einer Variante ein endformgebendes Verdichten bei gleichzeitigem Aushärten, was bei entsprechender Auslegung mit einer Überführung der Untermaß-Kontur in eine Nennmaß-Kontur durch Materialbewegung im Materialzuschnitt einhergeht.

Bei der besonders bevorzugten Ausgestaltung wird bei der Verdichtung des Materialzuschnitts Matrix-Material aus dem Materialzuschnitt in Überlaufkammern im Verdichtungswerkzeug verdrängt. Dabei ist in einer Variante vorgesehen, dass das Abfließen in die Überlaufkammern über Kanäle erfolgt, in denen sich nach dem Aushärten Sollbruchstellen ausbilden. So ist es möglich, dass die Säuberung des Materialzuschnitts von ausgetretenem Matrix-Material auf ein definiertes Aufbre chen der Sollbruchstellen mit einem Konturierungswerkzeug zurückgeht.

Im Folgenden wird die Erfindung anhand einer lediglich ein Ausführungsbeispiel darstellenden Zeichnung näher erläutert. In der Zeichnung zeigt jeweils in ganz schematischer Darstellung
Fig. 1 a) das vorschlagsgemäße Vorwärmen eines Materialzuschnitts in einer Heizeinrichtung und b) das vorschlagsgemäße Umformen des Materialzuschnitts in einem Umformwerkzeug,
Fig. 2 das vorschlagsgemäße Konturieren des Materialzuschnitts mittels eines Konturierungswerkzeugs,
Fig.3 das vorschlagsgemäße Verdichten und Aushärten des Materialzuschnitts mittels eines Aushärtewerkzeugs und
Fig. 4 das vorschlagsgemäße Säubern des Materialzuschnitts mittels eines Konturierungswerkzeugs.

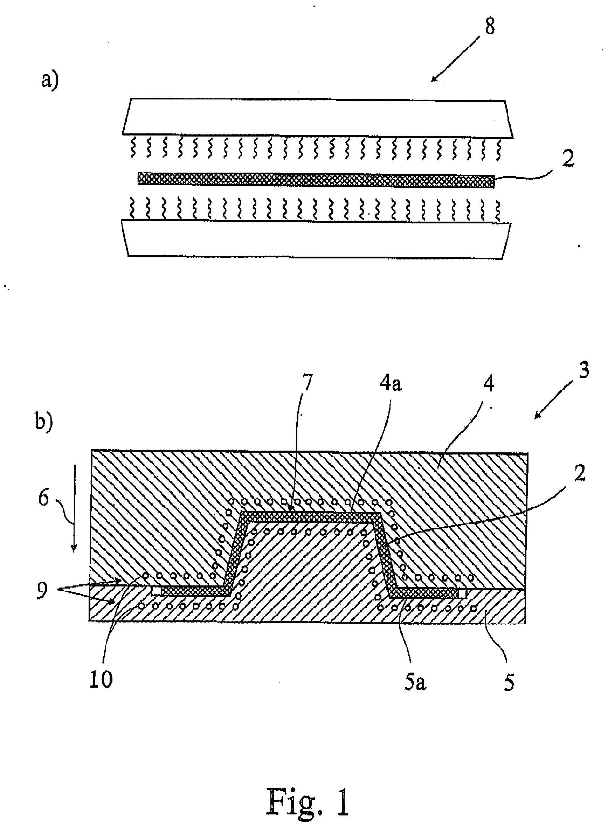

Die in den Fig. 1 bis 4 dargestellte Anlage dient der Durchführung des vorschlagsgemäßen Verfahrens zur Herstellung eines im Wesentlichen schalenförmigen, faserverstärkten Kunststoffteils 1. Für das Kunststoffteil 1 ist eine unbegrenzte Anzahl von Ausgestaltungen denkbar. Beispiele hierfür wurden im einleitenden Teil der Beschreibung gegeben.

In einem Verfahrensschritt wird ein Materialzuschnitt 2 in ein Umforinwerkzeug 3 eingelegt, das hier und vorzugsweise eine Obeimatrize 4 und eine Untermatrize 5 aufweist (Fig. 1). In einem weiteren Verfahrensschritt wird das Umformwkzeug 3 zum Umformen des Materialzuschnitts 2 entlang einer Schließrichtung 6 geschlossen. Die Obermatrize 4 und die Untermatrize 5 weisen zueinander korrespondierende Formgebungen auf, wobei bei geschlossenem Umformwerkzeug 3 eine Kavität 7 verbleibt, die mit dem Materialzuschnitt 2 ausgefüllt ist. Das Uniformen des Materialzuschnitts 2 wird in üblicher Weise durch die Formgebung von Obermatrize 4 und Untermatrize 5 bestimmt

Der Materialzuschnitt 2 besteht im Wesentlichen aus einem mit einem Matrix-Material, hier einem Matrix-Harz, imprägnierten Fasermaterial. Bei diesem Material handelt es sich um ein Prepreg-Material, wie oben erläutert. Die Auslegung des Prepreg-Materials ist je nach Anwendungsfall auf unterschiedliche Weise möglich. Vorzugsweise handelt es sich bei dem Prepreg-Material um ein CFK-Gewebe-Prepreg-Material. Grundsätzlich kann es sich bei dem Prepreg-Material je nach Anwendungsfall um beliebiges duroplastisches oder thermoplastisches Prepreg-Material handeln.

Vorschlagsgemäß wird der aus dem Prepreg-Material bestehende Materialzuschnitt 2 vor dem Einlegen in das Umformwerkzeug 3 zur Gewährleistung seiner Umformbarkeit zumindest zum Teil mittels einer Heizeinrichtung 3 vorgewärmt. Die Heizeinrichtung 8 während des Vorwärmens des Materialzuschnitts 2 zeigt Fig. 1a) schematisch. Fig. 1a) zeigt, dass hier und vorzugsweise der Materialzuschnitt 2 insgesamt vorgewärmt wird.

Von besonderer Bedeutung für die vorschlagsgemäße Lösung ist die Ausstattung des Umformwerkzeugs 3 mit einer Kühleinrichtung 9, die in Fig, 1b) durch Kühlrohre 10 angedeutet ist. Eine Möglichkeit der Kühlung besteht hier darin, die Kühlrohre 10 mit einer Kühlflüssigkeit zu durchströmen.

Das Umformwerkzeug 3 weist gegenüberliegende formgebende Flächen 4a, 5a auf, die den Materialzuschnitt 2 beim Umformen einschließen. Vorschlagsgemäß ist es vorgesehen, dass hier und vorzugsweise beide formgebenden Flächen 4a, 5a des Uniformwerkzeugs 3 bei eingelegtem Materialzuschnitt 2 zumindest zum Teil mittels der Kühleinrichtung 9 gekühlt werden und/oder gekühlt sind. Dies bedeutet, dass die Kühlung in einer Variante bereits läuft, wenn der Materialzuschnitt 2 eingelegt wird. In einer anderen Variante läuft die Kühlung erst an, wenn der Materialzuschnitt 2 bereits eingelegt ist.

Bei dem in Fig. 1b) dargestellten und insoweit bevorzugten Ausführungsbeispiel erfolgt die Kühlung mittels der Kühleinrichtung 9 vollflächig und beidseitig des Materialzuschnitts 2. Damit wird einem Anhaften des Materialzuschnitts 2 an der Obermatrize 4 und der Untermatrize 5 vollflächig entgegengewirkt. Dies ist sachgerecht, da Prepreg-Materialien regelmäßig schon bei Raumtemperatur klebrige Oberflächen aufweisen, was problematisch u. a. für deren Entnahme aus dem Umformwerkzeug 3 ist. Weiter führt die vollflächige Kühlung des Materialzuschnitts 2 zu einer entsprechend vollflächigen Materialversteifung, was die Handhabbarkeit des Materialzuschnitts 2 für den nachfolgenden Verfahrensschritt sowie die Bearbeitbarkeit des Materialzuschnitts 2 insbesondere im Hinblick auf eine noch zu erläuternde Konturierung vereinfacht.

In bevorzugter Ausgestaltung wird der Materialzuschnitt 2 vor der oben beschriebenen Vorwärmung zur Vermeidung eines chemischen Reagierens des Prepreg-Materials gekühlt gelagert. Mit "Reagieren" sind jegliche chemische Reaktionen, insbesondere ein ungewünschtes Vernetzen des Prepreg-Materials gemeint. Die Lagerungstemperatur liegt vorzugsweise unter -10° C. Bei derart niedrigen Temperaturen ist das Prepreg-Material je nach Auslegung wenig oder nicht umformbar, so dass der oben beschriebenen Vorwärmung hier besondere Bedeutung zukommt. In besonders bevorzugter Ausgestaltung liegt die Temperaturdifferenz zwischen der Lagerungstemperatur und der Vorwärmtemperatur zwischen etwa 40° C und etwa 90° C.

Die Vorwärmung des Materialzuschnitts 2 durch die Heizeinrichtung 8 erfolgt unterhalb der Aktivierungstemperatur des Prepreg-Materials, so dass ein
vorzeitiges Aushärten des Prepreg-Materials vermieden wird. In Versuchen hat sich allerdings gezeigt, dass eine Vorwärmung auf eine Temperatur vorteilhaft ist, die deutlich oberhalb von Raumtemperatur, nämlich oberhalb von etwa 40° C und insbesondere oberhalb von etwa 60° C liegt.

In besonders bevorzugter Ausgestaltung ist die Vorwärmung des Materialzuschnitts 2 gerade so getroffen, dass der Materialzuschnitt 2 umformbar, jedoch transportierbar ist. Damit ist die einfache Handhabbarkeit des Materialzuschnitts 2 sichergestellt. Vorteilhafterweise ist es dann alternativ oder zusätzlich so, dass der vorgewärmte, in das Umformwerkzeug 3 eingelegte Materialzuschnitt 2 nicht oder nur geringfügig an den gekühlten, formgebenden Flächen 4a, 5a des Umformwerkzeugs 3 anhaftet. Dieser Effekt geht maßgeblich auf das Temperaturgefälle zwischen Vorwärmung und Kühlung des Materialzuschnitts 2 bzw. den formgebenden Flächen 4a, 5a zurück.

Die vorschlagsgemäße Kühlung der formgebenden Flächen 4a, 5a des Umformwerkzeugs 3 ist weiter vorzugsweise so getroffen, dass der zu diesen Flächen 4a, 5a korrespondierende Materialzuschnitt 2 selbst gekühlt und dadurch versteift wird. Bei der Auslegung ist darauf zu achten, dass die Versteifung das Umformen des Materialzuschnitts 2 im Umformwerkzeug 3 nicht behindert. Dies lasst sich vorzugsweise dadurch realisieren, dass der Materialzuschnitt 2 unmittelbar nach dem Einlegen in das Umformwerkzeug 3 durch Schließen des Umformwerkzeugs 3 umgeformt wird, so dass das durch die Kühlung der formgebenden Flächen 4a, 5a bewirkte Versteifen des Materialzuschnitts 2 im Wesentlichen nach dem Umformen erfolgt. Dabei ist es selbstverständlich so, dass ein gewisses Versteifen des Materialzuschnitts 2 schon beim Einlegen des Materialzuschnitts 2 erfolgt, sofern die Kühlung während des Einlegens bereits läuft.

Versuchsweise konnte nachgewiesen werden, dass eine Kühlung der betreffenden formgebenden Flächen 4a, 5a des Umformwerkzeugs 3 auf eine Temperatur unter etwa 10° C, insbesondere von weniger als etwa 8° C, zu optimalen Ergebnissen führen kann. Dabei wird vorgeschlagen, die Temperaturdifferenz des erwärmten Materialzuschnitts 2 zu den gekühlten Flächen 4a, 5a des Umformwerkzeugs 3 zwischen etwa 30° C und 80° C vorzusehen.

Besonders bei der Herstellung von faserverstärkten Kunststoffteilen 2 mit konvexen oder konkaven Ausformungen hoher Steigung und beträchtlicher Höhenerstreckung hat sich die vorschlagsgemäße Kühlung des Umformwerkzeugs 3 bewährt. Dies liegt daran, dass bei solchen Formgestaltungen eine Beweglichkeit des Materialzuschnitts 2 im Umformwerkzeug 3 vorteilhaft und ggf. sogar notwendig ist. Die Verringerung des Anhaftens des Materialzuschnitts 2 an den formgebenden Flächen 4a, 5a des Uniformwerkzeugs 3 ist insoweit besonders vorteilhaft,

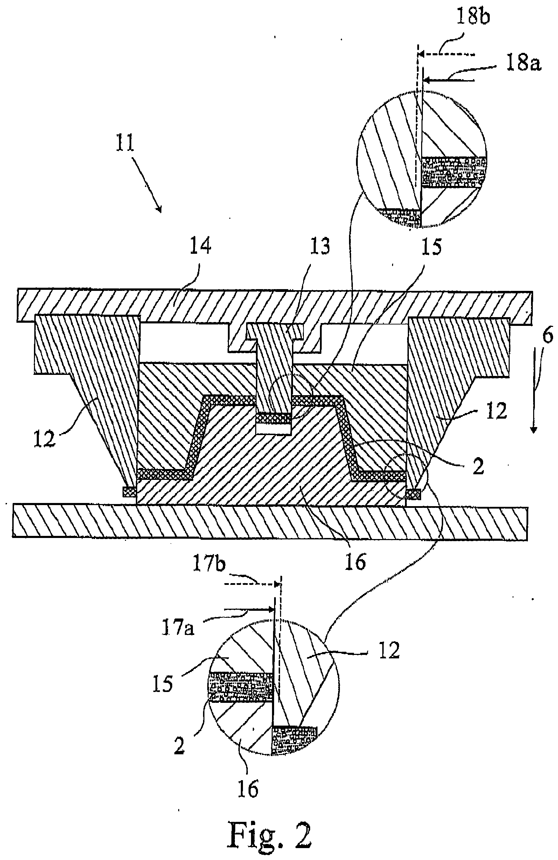

Fig. 2 zeigt den Verfahrensachritt, der dorn Umformen gemäß Fig. 1 folgt. Der umgeformte und zumindest zum Teil gekühlte Materialzuschnitt 2 wird hier durch eine trennende Bearbeitung konturiert. Mit "Konturierung" ist die Erzeugung von Außen- und Innenkonturen gemeint. Hier und vorzugsweise umfasst die Konturierung eine Besäumung, also die Entfernung ungewünschter Randbereiche des Materialzuschnitts 2, sowie eine Lochung des Materialzuschnitts 2. Entsprechend umfasst das Konturierungswerkzeug 11, das hier und vorzugsweise separat von dem Umformwerkzeug 3 ausgestaltet ist, ein Besäumungswerkzeug 12 und ein Lochwerkzeug 13. Je nach Ausgestaltung des herzustellenden Kunststoffteils 1 ist das Konturierungswerkzeug 11 mit entsprechenden Besäumungswerkzeugen, Lochwerkzeugen o. dgl. auszustatten.

Bei dem dargestellten und insoweit bevorzugten Ausführungsbeispiel weist das Konturierungswerkzeug 11 ein Kopfteil 14 auf, an dem sowohl das Besäumungswerkzeug 12 als auch das Lochwerkzeug 13 angeordnet sind, Bei dem Besäumungswerkzeug 12 handelt es sich um ein Schneidmesser, während es sich bei dem Lochwerkzeug 13 um einen Stanz-Stempel handelt. Es darf darauf hingewiesen werden, dass die Besäumung und das Lochen jeweils zur Erzeugung beliebiger Konturen vorgenommen werden können.

Das Konturierungswerkzeug 11 ist wie das Umformwerkzeug gemäß Fig. 1b) mit einer Obermatrize 15 und einer Untermatrize 16, hier zur Fixierung des Materialzuschnitts 2, ausgestattet. Das Kopfteil 14 ist so ausgelegt, dass es eine Bewegung: entlang der Schließrichtung 6 von Obermatrize 15 und Untermatrize 16 durchführen kann. Während dieser Bewegung des Kopfteils 14 erfolgt in einem einzigen Arbeitsgang das Besäumen und das Lochen.

Die vorschlagsgemäße Konturierung zeigt noch einen besonders interessanten Aspekt. Vorzugsweise ist es nämlich so, dass bei der Konturierung eine Untermaß-Kontur (17a, 18a) in den Materiälzuschnitt (2) eingebracht wird. Das Untermaß (17a, 18a) kann je nach absoluten Abmessungen des Kunststoffteils 1 und je nach Prepreg-Material bis zu 1 mm bemessen sein. In besonderen Anwendungsfällen kann auch ein Untermaß (17a, 18a) von mehr als 1 mm auftreten,

Die Untermaß-Kontur (17a, 18a) wird in einem späteren Verfahrensschritt in eine Nennmaß-Kontur (17b, 18b) überführt Dies wird weiter unten erläutert.

Dem Umformen und ggf. dem Konturieren folgt mindestens ein Aushärteschritt. Vorzugsweise erfolgt das Aushärten des Prepreg-Materials zunächst in vorbestimmten Bereichen durch gezielte Wärmezufuhr lokal. Dies lässt sich beispielsweise durch nicht dargestellte, vorgewärmte Stempel erreichen, die auf die betreffenden Bereiche zugestellt werden. In besonders bevorzugter Ausgestaltung erfolgt ein solches lokales Ausharten im Bereich von Lochungen. Vorzugsweise bewirkt das Zustellen des betreffenden Stempels, der vorzugsweise eine ringförmige Oberfläche aufweist, ein lokales Verdichten des Materialszuschnitts 2 mit einem entsprechenden Verdrängen des dortigen Matrix-Materials nach außen. Entsprechend bildet sich an der Innenfläche der Lochung eine dünne Schicht aus Matrix-Material, das durch die Vorwärmung des Stempels aushärtet. Innerhalb der Lochung kann ein Formstempel vorgesehen sein, der eine Gegenform für das austretende Matrix-Material bereitstellt. Der Formstempel dient gewissermaßen als Gießform für das austretende Matrix-Material. Durch dieses gezielte Aushärten lassen sich auch komplizierte Randgeometrien faserfrei herstellen.

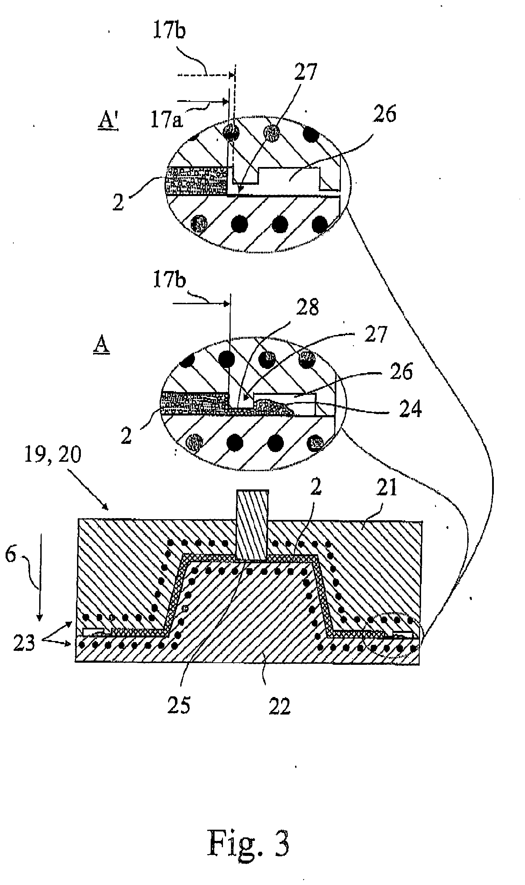

Der umgeformte und ggf. konturierte Materialzuschnitt 2 wird in besonders bevorzugter Ausgestaltung anschließend insgesamt thermisch ausgehärtet. Dies ist in Fig. 3 dargestellt. Hier und vorzugsweise ist es zusätzlich so, dass der umgeformte und ggf konturierte Materialzuschnitt 1 in einem Verdichtungswerkzeug 19 endformgebend verdichtet wird. Bei der in Fig. 3 dargestellten und insoweit bevorzugten Ausgestaltung zeigt sich eine konstruktiv besonders kompakte Variante dadurch, dass das thermische Aushärten und das Verdichten im Wesentlichen gleichzeitig in einem einzigen Aushärtewerkzeug 20 vorgenommen werden, wobei das Aushärtawerkzeug 20 hier dem obigen Verdichtungswerkzeug 19 entspricht.

Auch das Aushärtewerkzeug 20 ist mit einer Obermatrize 21 und einer Untermatrize 22 ausgestattet. Das Aushärtewerkzeug 20 ist nach Art einer Presse ausgestaltet, so dass die Obermatrize 21 in Schließrichtung 6 mit hoher Kraft gegen die Untermatrize 22 gepresst werden kann. Dabei findet zunächst ein Verdichten des Materialzuschnitts 2 statt. Dem Aushärtewerkzeug 20 ist weiter eine Heizeinrichtung 23 zugeordnet, mittels der das Aufwärmen des Materialzuschnitts 2 über seine Aktivierungstemperatur hinaus möglich ist. Entsprechend wird der Materialzuschnitt 2 mittels der Heizeinrichtung 23 vorzugsweise auf eine Aushärtetemperatur oberhalb von 100° C erwärmt.

Die formgebenden Flächen der Obermatrize 21 und der Untermatrize 22 des Aushärtewerkzeugs 20 sind vorzugsweise derart beschichtet, das eine einfache Entnahme des Materialzuschnitts 2 möglich ist. Eine mögliche Beschichtung ist hier beispielsweise eine Antihaft-Beschichtung,

Interessant bei dem in Fig. 3 dargestellten Verdichtungs- und Aushärtevorgang ist die Tatsache, dass bei der Verdichtung Matrix-Material aus dem Materialzuschnitt 2 heraus verdrängt wird, wobei das verdrängte Matrix-Material 24 in Überlaufkammern 25, 26 im Verdichtungswerkzeug 19 bzw. Aushärtewerkzeug 20 abfließt. Dieses Abfließen des verdrängten Matrix-Matedals 24 ist der Detaildarstellung A in Fig. 3 zu entnehmen. Den noch unverdichteten Zustand des Materialzuschnitts 2 zeigt die Detaildarstellung A' in Fig. 3. Ein Vergleich der beiden Detaildarstellungen A, A' zeigt, dass die Untermaß-Kontur 17a durch das Verdichten, insbesondere durch die resultierende Materialbewegung im Materialzuschnitt 2, in die jeweilige Nennmaßkontur 17b überführt wird.

Das Aushärtewerkzeug 20 ist gemäß Fig. 3 in besonders vorteilhafter Weise ausgestaltet derart, dass das verdrängte und ausgehärtete Matrix-Material 24 auf besonders einfache Weise im Rahmen einer Säuberung von dem Materialzuschnitt 2 entfernt werden kann. Dabei ist es vorzugsweise so, dass das verdrängte Matrix-Material 24 zumindest teilweise über Kanäle 27 in die Überlaufkammern 26 abfließt, wobei die Kanäle 27 so ausgestaltet sind, dass das in den Kanälen 27 verbleibende Matrix-Material 24 nach dem Aushärten als Sollbruchstelle 28 dient. Um ein vordefiniertes Bruchverhalten der Sollbruchstelle sicherzustellen, ist der Kanal 27 in einem Querschnitt besonders flach ausgestaltet, so dass das im Kanal 27 verbleibende, ausgehärtete Matrix-Material 24 entsprechend dünn und brüchig ist. Im Idealfall bildet dieser Teil des Matrix-Materials 24 einen dünnen Steg mit einer Höhe von im Querschnitt weniger als 0,5 mm. Der Begriff "Kanal" ist hier weit zu verstehen und umfasst jede Durchführung für verdrängtes Matrix-Material 24.

Um auch komplizierte Geometrien, insbesondere Hinterschnitte realisieren zu können, können insbesondere das Umformwerkzeug 3 und das Konturierungswerkzeug 11 mit Schiebern ausgestattet sein, deren Vorschubrichtung nicht auf die Schließrichtung 6 von Oberwerkzeug 4, 21 und Unterwerkzeug 5, 22 ausgerichtet ist.

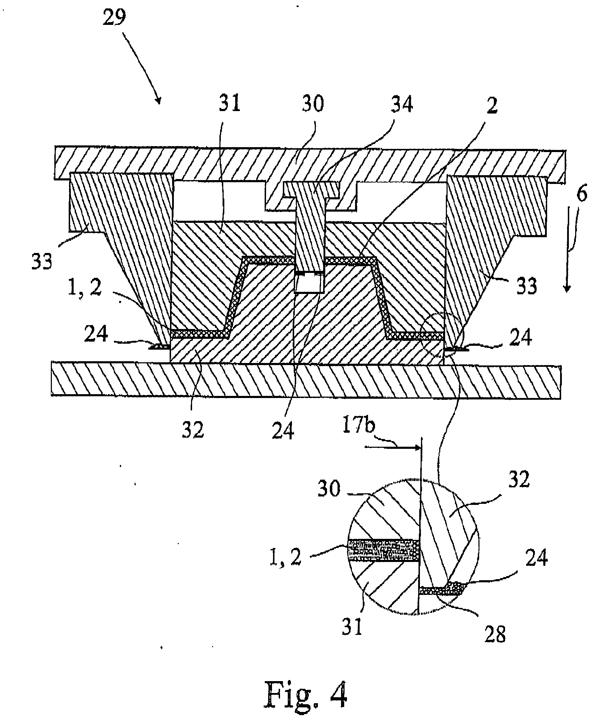

In besonders bevorzugter Ausgestaltung gemäß Fig. 4 ist für die Säuberung ein Konturierungswerkzeug 29 vorgesehen, dessen Aufbau dem grundsätzlichen Aufbau des in Fig. 2 dargestellten Konturierungswerkzeugs 11 entspricht. Entsprechend sind auch hier ein Kopfteil 30, eine Obermatrize 31, eine Untermatrize 32 sowie ein Besäumungswerkzeug 33 und ein Lochwerkzeug 34 vorgesehen. Das Konturierungswerkzeug 29 sorgt hier dafür, dass die durch die obigen Kanale 27 erzeugten Sollbruchstellen 28 aufgebrochen werden. Diese Art der Säuberung des Materialzuschnitts 2 ist besonders für duroplastische Prepreg-Materialien vorteilhaft, da insbesondere ein Schneiden ausgehärteter duroplastischer Materialien nur schwer möglich ist.

Es darf noch darauf hingewiesen werden, dass das in Fig. 3 dargestellte Verdichten und Aushärten so ausgelegt werden kann, dass nach dem Aushärten randseitig eine dünne Schicht von Matrix-Material verbleibt, die gewissermaßen einen Abschluss des jeweiligen Randes bildet. Dabei können Formelemente, insbesondere Formstempel vorgesehen sein, die gewissermaßen als Gießform für das austretende Matrix-Material dienen. Dies wurde im Zusammenhang mit dem lokalen Aushärten bereits angesprochen.

Die Anlage kann grundsätzlich eine einzelne Presse aufweisen, die eine Reihe von Folgeverbundwerkzeugen aufweist. Dabei kann das in Fig. 1b dargestellte Umformwerkzeug 3, das in Fig. 2 dargestellte Konturierungswerkzeug 11, das in Fig. 3 dargestellte Aushärtswerkzeug 20 und das in Fig. 4 dargestellte Säuberungs- bzw. Konturierungswerkzeug 29 jeweils als Folgeverbundwerkzeug ausgestaltet sein. Denkbar ist aber auch, dass jedes der oben genannten Werkzeuge konstruktiv separat ausgestaltet ist.

Die Verkettung der Anlage kann grundsätzlich automatisiert erfolgen, vorzugsweise durch Greifertransfer oder robotergestützte Handhabungssysteme. Dies ist insbesondere dadurch leicht möglich, dass wie oben erläutert eine gewisse Formstabilität des Materialzuschnitts 2 während des gesamten Herstellungsverfahrens gewahrleistet ist.

## Patentansprüche

1. Verfahren zur Herstellung eines im Wesentlichen schalenförmigen, faserverstärkten Kunststoffteils (1), wobei ein Materialzuschnitt (2) in ein Umformwerkzeug (3) insbesondere mit Obermatrize (4) und Untermatrize (5) eingelegt wird und das Umformwerkzeug (3) anschließend zum Umformen des Materialzuschnitts (2) geschlossen wird, wobei der Materialzuschnitt (2) aus einem mit einem Matrix-Material imprägnierten Fasermaterial - Prepregmaterial - besteht, wobei der Materialzuschnitt (2) vor dem Einlegen zur Gewährleistung seiner Umformbarkeit zumindest zum Teil mittels einer Heizeinrichtung (8) vorgewärmt wird und wobei mindestens eine formgebende Fläche (4a, 5a) des Umformwerkzeugs (3) bei eingelegtem Materialzuschnitt (2) zumindest zum Teil mittels einer Kühleinrichtung (9) gekühlt wird und/oder gekühlt ist,
**dadurch gekennzeichnet, dass**
die Vorwärmtemperatur des Materialzuschnitts (2) unterhalb der Aktivierungstemperatur des Prepregmaterials liegt, wobei der Materialzuschnitt (2) zumindest zum Teil auf mindestens etwa 40° C vorgewärmt wird, und
die formgebenden Flächen (4a, 5a) des Umformwerkzeugs (3) zumindest zum Teil auf eine Temperatur von unter etwa 10° C gekühlt werden.

2. Verfahren nach Anspruch 1, **dadurch gekennzeichnet, dass** der Materialzuschnitt (2) vor der Vorwärmung zur Vermeidung eines chemischen Reagierens des Prepregmaterials gekühlt gelagert wird, vorzugsweise, dass die Lagerungstemperatur unter etwa -10° C liegt, vorzugsweise, dass die Temperaturdifferenz zwischen der Lagerungstemperatur und der Vorwärmtemperatur zwischen etwa 40° C und etwa 90° C liegt.

3. Verfahren nach Anspruch 1 oder 2, **dadurch gekennzeichnet, dass** der Materialzuschnitt (2) zumindest zum Teil auf mindestens etwa 60° C vorgewärmt wird.

4. Verfahren nach einem der vorhergehenden Ansprüche, **dadurch gekennzeichnet, dass** der vorgewärmte Materialzuschnitt (2) umformbar, jedoch transportierbar ist, und/oder, dass der vorgewärmte, in das Umformwerkzeug (3) eingelegte Materialzuschnitt (2) nicht oder nur geringfügig an den gekühlten, formgebenden Flächen (4a, 5a) des Umformwerkzeugs (3) anhaftet.

5. Verfahren nach einem der vorhergehenden Ansprüche, **dadurch gekennzeichnet, dass** die formgebenden Flächen (4a, 5a) des Umformwerkzeugs zumindest zum Teil derart gekühlt werden, dass der zu diesen Flächen (4a, 5a) korrespondierende Materialzuschnitt (2) gekühlt und dadurch versteift wird, vorzugsweise, dass der Materialzuschnitt (2) unmittelbar nach dem Einlegen in das Umformwerkzeug (3) durch Schließen des Umformwerkzeugs (3) umgeformt wird, so dass das durch die Kühlung der formgebenden Flächen (4a, 5a) bewirkte Versteifen des Materialzuschnitts (2) im Wesentlichen nach dem Umformen erfolgt.

6. Verfahren nach einem der vorhergehenden Ansprüche, **dadurch gekennzeichnet, dass** die formgebenden Flächen des Umformwerkzeugs (3) zumindest zum Teil auf eine Temperatur von weniger als etwa 8° C gekühlt werden, wobei die Temperaturdifferenz des erwärmten Materialzuschnitts (2) zu den gekühlten Flächen (4a, 5a) des Umformwerkzeugs (3) vorzugsweise zwischen etwa 30° C und etwa 80° C liegt.

7. Verfahren nach einem der vorhergehenden Ansprüche, **dadurch gekennzeichnet, dass** der umgeformte und zumindest zum Teil gekühlte Materialzuschnitt (2) durch eine trennende Bearbeitung konturiert wird, vorzugsweise, dass die Konturierung eine Besäumung und/oder eine Lochung o. dgl. des Materialzuschnitts (2) umfasst, weiter vorzugsweise, dass die Konturierung in einem vorzugsweise von dem Umformwerkzeug (3) separaten Konturierungswerkzeug (11), vorgenommen wird, das ein Besäumungswerkzeug (12) und/oder ein Lochwerkzeug (13) umfasst.

8. Verfahren nach einem der vorhergehenden Ansprüche, **dadurch gekennzeichnet, dass** bei der Konturierung eine Untermaß-Kontur (17a, 17b) in den Materialzuschnitt (2) eingebracht wird.

9. Verfahren nach einem der vorhergehenden Ansprüche, **dadurch gekennzeichnet, dass** der umgeformte und ggf. konturierte Materialzuschnitt (2) in vorbestimmten Bereichen durch gezielte Wärmezufuhr lokal ausgehärtet wird, vorzugsweise, dass das lokale Aushärten im Bereich von Lochungen vorgesehen wird.

10. Verfahren nach einem der vorhergehenden Ansprüche, **dadurch gekennzeichnet, dass** der umgeformte und ggf. konturierte Materialzuschnitt (2), vorzugsweise nach dem ggf. vorgesehenen lokalen Aushärten, insgesamt thermisch ausgehärtet wird, und/oder, dass der umgeformte und ggf. konturierte Materialzuschnitt (2) in einem Verdichtungswerkzeug (19) endformgebend verdichtet wird.

11. Verfahren nach Anspruch 10, **dadurch gekennzeichnet, dass** das thermische Aushärten und das Verdichten im Wesentlichen gleichzeitig in einem Aushärtewerkzeug (20) vorgenommen werden.

12. Verfahren nach Anspruch 10 und ggf. nach Anspruch 11, **dadurch gekennzeichnet, dass** bei der Verdichtung die Untermaß-Kontur (17a, 17b) durch Materialbewegung im Materialzuschnitt in eine Nennmaß-Kontur (18a, 18b) überführt wird.

13. Verfahren nach Anspruch 10 und ggf. nach Anspruch 11 oder 12, **dadurch gekennzeichnet, dass** bei der Verdichtung Matrix-Material aus dem Materialzuschnitt (2) heraus verdrängt wird und dass das verdrängte Matrix-Material (24) in Überlaufkammern (25, 26) im Verdichtungswerkzeug (19) bzw. Aushärtewerkzeug (20) abfließt, vorzugsweise, dass das verdrängte Matrix-Material (24) zumindest teilweise über Kanäle (27) in die Überlaufkammern (25, 26) abfließt und dass das in den Kanälen (27) verbleibende Matrix-Material (24) nach dem Aushärten als Sollbruchstellen (28) dienen.

14. Verfahren nach Anspruch 13, **dadurch gekennzeichnet, dass** der verdichtete und ausgehärtete Materialzuschnitt (2) von aus dem Materialzuschnitt (2) ausgetretenem Matrix-Material (24) gesäubert wird, vorzugsweise, dass der Säuberung ein Konturierungswerkzeug (29), das vorzugsweise ein Besäumungswerkzeug (33) und/oder ein Lochwerkzeug (34) umfasst, dient, das insbesondere die Sollbruchstellen (28) aufbricht.

## Claims

1. A method for the manufacture of an essentially shell-form, fibre-reinforced plastic part (1), wherein a material blank (2) is inserted into a moulding tool (3), in particular with an upper die (4) and a lower die (5), and the moulding tool (3) is subsequently closed to mould the material blank (2), wherein the material blank (2) consists of a fibrous material impregnated with a matrix material - prepreg material -, wherein the material blank (2) is preheated at least partially by means of a heating device (8) prior to the insertion in order to ensure its mouldability, and in that at least one shaping surface (4a, 5a) of the moulding tool (3) is cooled, and/or cooled at least partially, by means of a cooling device (9) when the material blank (2) is inserted,
**characterised in that**
the preheating temperature of the material blank (2) lies below the activation temperature of the prepreg material, wherein the material blank (2) is at least partially preheated to at least approx. 40 °C, and
the shaping surfaces (4a, 5a) of the moulding tool (3) are at least partially cooled to a temperature of less than approx. 10 °C.

2. The method in accordance with claim 1, **characterised in that** the material blank (2) is stored in a cooled state prior to preheating in order to avoid a chemical reaction of the prepreg material, preferably, **in that** the storage temperature is below approx. -10 °C, preferably, **in that** the temperature difference between the storage temperature and the preheating temperature is between approx. 40 °C and approx. 90 °C.

3. The method in accordance with claim 1 or 2, **characterised in that** the material blank (2) is at least partially preheated to at least approx. 60 °C.

4. The method in accordance with one of the preceding claims, **characterised in that** the preheated material blank (2) is mouldable, but transportable, and/or **in that** the preheated material blank (2) inserted into the moulding tool (3) does not adhere, or adheres only slightly, to the cooled shaping surfaces (4a, 5a) of the moulding tool (3).

5. The method in accordance with one of the preceding claims, **characterised in that** the shaping surfaces (4a, 5a) of the moulding tool are at least partially cooled such that the material blank (2) corresponding to these surfaces (4a, 5a) is cooled and thereby stiffened, preferably, **in that** the material blank (2) is shaped by closing the moulding tool (3) immediately after being inserted into the moulding tool (3), so that the stiffening of the material blank (2) brought about by the cooling of the shaping surfaces (4a, 5a) takes place essentially after the moulding.

6. The method in accordance with one of the preceding claims, **characterised in that** the shaping surfaces of the moulding tool (3) are at least partially cooled to a temperature of less than approx. 8°C, wherein the temperature difference between the heated material blank (2) and the cooled surfaces (4a, 5a) of the moulding tool (3) lies preferably between approx. 30°C and approx. 80°C.

7. The method in accordance with one of the preceding claims, **characterised in that** the moulded and at least partially cooled material blank (2) is contoured by means of a parting treatment, preferably, **in that** the contouring comprises a trimming and/or a perforation, or the like, of the material blank (2), further preferably, **in that** the contouring is undertaken by a contouring tool (11), which is preferably separate from the moulding tool (3), and which comprises a trimming tool (12) and/or a perforating tool (13).

8. The method in accordance with one of the preceding claims, **characterised in that** during the contouring process, an undersize contour (17a, 17b) is introduced into the material blank (2).

9. The method in accordance with one of the preceding claims, **characterised in that** the moulded and optionally contoured material blank (2) is locally cured in predetermined regions by a targeted heat supply, preferably, **in that** the local curing is provided in the region of perforations.

10. The method in accordance with one of the preceding claims, **characterised in that** the moulded and optionally contoured material blank (2) is thermally cured overall, preferably after the optionally provided local curing, and/or **in that** the moulded and optionally contoured material blank (2) is compacted to its final shape in a compaction tool (19).

11. The method in accordance with claim 10, **characterised in that** the thermal curing and the compaction are undertaken essentially simultaneously in a curing tool (20).

12. The method in accordance with claim 10, and where appropriate in accordance with claim 11, **characterised in that** during the compaction process, the undersize contour (17a, 17b) is converted into a nominal dimension contour (18a, 18b) by material movement in the material blank.

13. The method in accordance with claim 10, and where appropriate in accordance with claims 11 or 12, **characterised in that** during the compaction process, matrix material is displaced out of the material blank (2), and **in that** the displaced matrix material (24) flows out into overflow chambers (25, 26) in the compaction tool (19) or the curing tool (20), preferably, **in that** the displaced matrix material (24) flows out at least partially via channels (27) into the overflow chambers (25, 26), and **in that** the matrix material (24) remaining in the channels (27) after curing serves to provide predetermined breaking points (28).

14. The method in accordance with claim 13, **characterised in that** the compacted and cured material blank (2) is cleaned of matrix material (24) that has escaped from the material blank (2), preferably, **in that** a contouring tool (29), which comprises a trimming tool (33) and/or a perforating tool (34), which in particular breaks open the predetermined breaking points (28), serves to provide the cleaning process.

## Revendications

1. Procédé de fabrication d'une pièce en plastique (1) renforcée par fibres essentiellement en forme de coque, dans lequel un flan de matériau (2) est inséré dans un outil de formage (3) en particulier avec matrice supérieure (4) et matrice inférieure (5) et l'outil de formage (3) est ensuite fermé pour transformer le flan de matériau (2), dans lequel le flan de matériau (2) est composé d'un matériau de fibres imprégné avec un matériau-matrice - matériau prépreg -, dans lequel le flan de matériau (2) est préchauffé avant l'insertion au moins en partie au moyen d'un dispositif de chauffage (8) afin de garantir sa capacité de transformation, et dans lequel au moins une surface formatrice (4a, 5a) de l'outil de formage (3) est refroidie et/ou est déjà refroidie au moins en partie au moyen d'un dispositif de refroidissement (9) lorsque le flan de matériau (2) est inséré, **caractérisé en ce que**
la température de préchauffage du flan de matériau (2) est au-dessous de la température d'activation du matériau prépreg, dans lequel le flan de matériau (2) est préchauffé au moins en partie à au moins environ 40 °C, et
les surfaces formatrices (4a, 5a) de l'outil de formage (3) sont refroidies au moins en partie à une température inférieure à environ 10 °C.

2. Procédé selon la revendication 1, **caractérisé en ce que** le flan de matériau (2) est stocké refroidi avant le préchauffage pour éviter une réaction chimique du matériau prépreg, de préférence que la température de stockage est inférieure à environ -10 °C, de préférence que la différence de température entre la température de stockage et la température de préchauffage est située entre environ 40 °C et environ 90 °C.

3. Procédé selon la revendication 1 ou 2, **caractérisé en ce que** le flan de matériau (2) est préchauffé au moins en partie à au moins environ 60 °C.

4. Procédé selon l'une des revendications précédentes, **caractérisé en ce que** le flan de matériau (2) préchauffé est déformable, toutefois transportable et/ou que le flan de matériau (2) préchauffé inséré dans l'outil de formage (3) n'adhère pas ou seulement légèrement aux surfaces formatrices (4a, 5a) refroidies de l'outil de formage (3).

5. Procédé selon l'une des revendications précédentes, **caractérisé en ce que** les surfaces formatrices (4a, 5a) de l'outil de formage sont refroidies au moins en partie de telle façon que le flan de matériau (2) correspondant à ces surfaces (4a, 5a) est refroidi et ainsi rigidifié, de préférence que le flan de matériau (2) est mis en forme immédiatement après l'insertion dans l'outil de formage (3) par fermeture de l'outil de formage (3), de sorte que la rigidification du flan de matériau (2) opérée par le refroidissement des surfaces formatrices (4a, 5a) a lieu essentiellement après la transformation.

6. Procédé selon l'une des revendications précédentes, **caractérisé en ce que** les surfaces formatrices de l'outil de formage (3) sont refroidies au moins en partie à une température inférieure à environ 8 °C, dans lequel la différence de température du flan de matériau (2) réchauffé par rapport aux surfaces (4a, 5a) refroidies de l'outil de formage (3) est de préférence entre environ 30 °C et environ 80 °C.

7. Procédé selon l'une des revendications précédentes, **caractérisé en ce que** le flan de matériau (2) transformé et au moins en partie refroidi est contourné par un usinage de séparation, de préférence que le contournage comprend un rognage et/ou une perforation ou similaire du flan de matériau (2), plus encore de préférence que le contournage est effectué dans un outil de contournage (11) de préférence séparé de l'outil de formage (3) qui comprend un outil de rognage (12) et/ou un outil de perforation (13).

8. Procédé selon l'une des revendications précédentes, **caractérisé en ce que** lors du contournage, un contour aux dimensions inférieures (17a, 17b) est pratiqué dans le flan de matériau (2).

9. Procédé selon l'une des revendications précédentes, **caractérisé en ce que** le flan de matériau (2) transformé et, le cas échéant, contourné est durci localement en des endroits prédéterminés par un apport de chaleur ciblé, de préférence que le durcissement local est prévu au niveau de perforations.

10. Procédé selon l'une des revendications précédentes, **caractérisé en ce que** le flan de matériau (2) transformé et, le cas échéant, contourné est durci thermiquement en tout, de préférence après le durcissement local prévu le cas échéant, et/ou que le flan de matériau (2) transformé et, le cas échéant, contourné est comprimé à sa forme finale dans un outil de compression (19).

11. Procédé selon la revendication 10, **caractérisé en ce que** le durcissement thermique et la compression sont effectués essentiellement parallèlement dans un outil de durcissement (20).

12. Procédé selon la revendication 10 et le cas échéant selon la revendication 11, **caractérisé en ce que** lors de la compression, le contour aux dimensions inférieures (17a, 17b) passe à un contour à la cote nominale (18a, 18b) par un mouvement de matériau dans le flan de matériau.

13. Procédé selon la revendication 10 et le cas échéant selon la revendication 11 ou 12, **caractérisé en ce que** lors de la compression, du matériau-matrice est repoussé hors du flan de matériau (2) et que le matériau-matrice (24) repoussé s'écoule dans des chambres de trop-plein (25, 26) dans l'outil de compression (19) respectivement l'outil de durcissement (20), de préférence que le matériau-matrice (24) repoussé s'écoule dans les chambres de trop-plein (25, 26) au moins partiellement par des canaux (27) et que le matériau-matrice (24) restant dans les canaux (27) sert en tant que points de rupture (28) après le durcissement.

14. Procédé selon la revendication 13, **caractérisé en ce que** le flan de matériau (2) comprimé et durci est nettoyé du matériau-matrice (24) sorti du flan de matériau (2), de préférence qu'un outil de contournage (29) qui comprend de préférence un outil de rognage (33) et/ou un outil de perforation (34) qui rompt essentiellement les points de rupture (28), sert au nettoyage.
